# FASCICULE DE BREVET EUROPEEN

(11) **EP 0 609 645 B1**
(45) Date de publication et mention de la délivrance du brevet: **11.06.1997**
(21) Numéro de dépôt: 93870078.8
(22) Date de dépôt: 11.05.1993
(51) Int. Cl.: H02K 1/28

(54) **Moteur électrique asynchrone de puissance élevée et à vitesse de rotation élevée**
Elektrischer Asynchronmotor mit hoher Drehgeschwindigkeit und hoher Leistung
High rotating speed, high power electrical asynchronous motor

(30) Priorité: 05.02.1993 EP 93870023
(43) Date de publication de la demande: 10.08.1994
(73) Titulaire: GEC ALSTHOM ACEC ENERGIE S.A., 6030 Charleroi (BE)
(72) Inventeur: Bawin, Pierre, B-6032 Mont/Sur/Marchienne (BE); Botte, Roland, B-6180 Courcelle (BE); Edebouw, Jean-Marie, B-6120 Marbaix-la-Tour (BE); Gilon, Dominique, B-1410 Waterloo (BE)
(74) Mandataire: Van Malderen, Michel

(56) Documents cités:
- EP-A- 0 343 313
- EP-A- 0 509 119
- DE-C- 578 782
- DE-C- 603 312
- DE-C- 905 044

## Description

### Objet de l'invention

La présente invention concerne un moteur électrique de grande puissance qui est destiné à fonctionner à des vitesses de rotation très élevées. Elle concerne plus particulièrement des perfectionnements apportés au rotor d'un tel moteur électrique, notamment un moteur asynchrone.

### Domaine technique de l'invention

Il existe actuellement un besoin de disposer de moteurs électriques puissants qui peuvent fonctionner à vitesse de rotation élevée, à savoir de l'ordre de 10.000 t/min et plus.

Les améliorations apportées aux semi-conducteurs constituant l'électronique de puissance permettent actuellement de commander des moteurs asynchrones de puissance élevée à fréquence variable et donc de réguler la vitesse de rotation des moteurs asynchrones qui peuvent afficher des puissances de l'ordre de plusieurs mégawatts

Lancer de grosses machines à des vitesses de rotation de l'ordre de grandeur susmentionné pose toutefois des difficultés d'ordre mécanique, notamment en ce qui concerne la résistance mécanique des parties mobiles de ces machines, en l'occurrence le rotor.

Dans un rotor de construction classique, une masse magnétique feuilletée constituée d'un empilement de tôles rotoriques est montée par serrage sur un arbre de rotation du rotor.

Selon cette configuration, les tôles rotoriques constituant la masse magnétique, possèdent un trou central destiné au passage de l'arbre de rotation et présentent de ce fait des contraintes au bord du trou central lors de l'alésage et ensuite sous l'action de la force centrifuge lors de la rotation du rotor.

La cage écureuil du rotor est quant à elle constituée classiquement de deux anneaux de court-circuit disposés de part et d'autre de la masse magnétique et reliés par des barres réparties uniformément à la périphérie de ladite masse magnétique. Un tel moteur est connu du document EP-A-343 313.

### Buts de la présente invention

La présente invention vise à proposer un moteur électrique asynchrone de puissance élevée et à vitesse de rotation élevée de conception tout à fait originale qui ne présente pas les inconvénients de l'art antérieur.

En particulier, la présente invention vise à proposer un moteur électrique asynchrone qui présente une plus grande vitesse périphérique et un fréquence propre particulièrement élevée.

D'autres buts et avantages apparaîtront dans la description qui suit.

### Principaux éléments caractéristiques de la présente invention

La présente invention se rapporte à un moteur électrique asynchrone de puissance élevée et à vitesse de rotation élevée constitué d'un stator et d'un rotor dont le rotor comprend une masse magnétique feuilletée constitué d'un empilement de tôles rotoriques et une cage d'écureuil constituée par une pluralité de barres réparties à la périphérie de ladite masse magnétique et par deux anneaux de court-circuit reliant les barres et disposés de part et d'autre de ladite masse magnétique, la masse magnétique étant maintenue rigide par une série de tirants s'appuyant sur deux bouts d'arbre eux-mêmes disposés de part et d'autre de l'ensemble constitué par la masse magnétique et les anneaux de court-circuit, tel que décrit dans EP-A-0 509 119. Le moteur de la présente invention est caractérisé en ce que les tôles rotoriques sont démunies de trou central, et en ce que chacun des deux anneaux de court-circuit est placé entre un bout d'arbre et la masse magnétique, lesdits anneaux de court-circuit étant pressés contre la masse magnétique par lesdits tirants.

Le rotor comprend également de part et d'autre de la masse magnétique et des anneaux de court-circuit, deux bouts d'arbre rapportés supportant les paliers.

On a observé que de manière avantageuse, il n'était plus obligatoire de réaliser ces bouts d'arbres dans le même matériau que la masse magnétique.

Le rotor comprend en outre des tirants destinés à réaliser l'assemblage des différentes parties constituant celui-ci.

### Brève description des figures

- La figure 1 représente une vue en perspective d'un rotor selon la présente invention laissant apparaître essentiellement toutes les parties constitutives de celui-ci.
- La figure 2 représente une vue en coupe le long de l'axe de rotation pour la moitié supérieure d'un rotor selon la présente invention.
- La figure 3 représente une vue en coupe d'une tôle rotorique de la masse magnétique selon la présente invention, transversalement par rapport à l'axe du rotor.

### Description détaillée d'une forme préférée de la présente invention

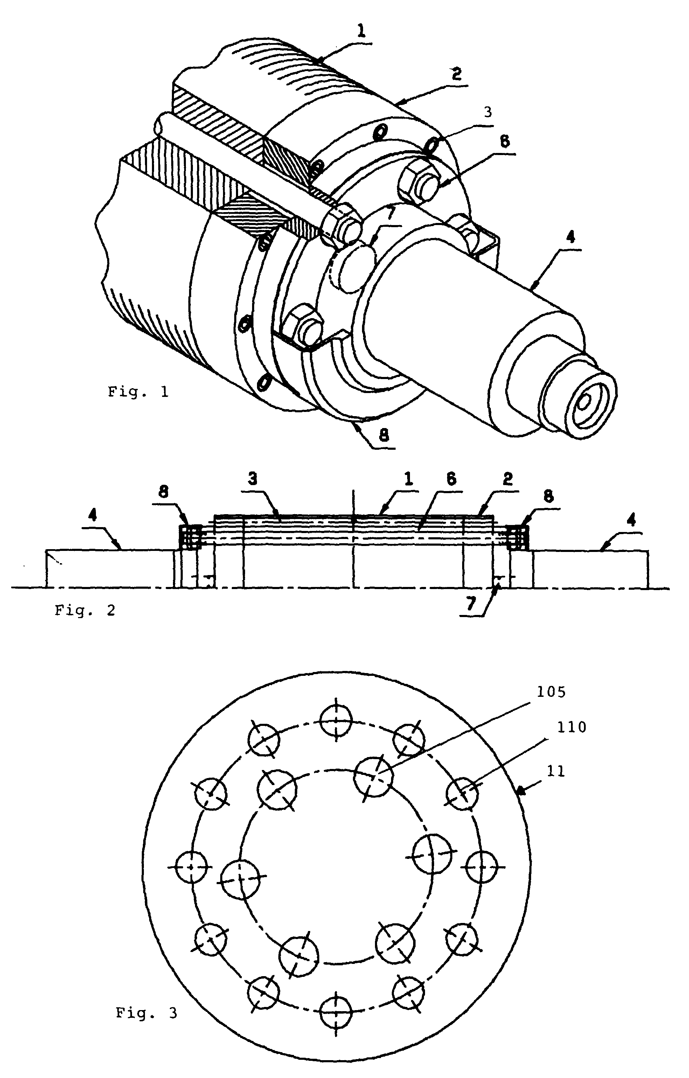

Les figures 1 et 2 représentent respectivement une vue en perspective et une vue en coupe le long de l'axe d'un rotor pour un moteur de machine asynchrone pouvant atteindre des vitesses très élevées, en faisant abstraction du stator.

Le rotor comprend essentiellement une masse magnétique feuilletée (1) et une cage d'écureuil. La masse magnétique (1) est constituée d'un empilement de tôles rotoriques (11) dont on a représenté une de celles-ci en coupe transversale à la figure 3.

La cage d'écureuil est constituée de deux anneaux de court-circuit (2) reliés entre-eux par une pluralité de barres (3) réparties uniformément à la périphérie de la masse magnétique (1). Les anneaux de court-circuit et les barres sont réalisés en une matière à résistance mécanique élevée et à résistivité électrique faible, généralement en cuivre allié.

Ainsi que représenté à la figure 3, les tôles rotoriques (11) constituant la masse magnétique (1) du rotor sont démunies de trou central. Ceci permet avantageusement de diminuer les contraintes mécaniques subies par les tôles rotoriques sous l'action de la force centrifuge.

La raideur transversale des tôles (11) est assurée par centrage de la masse magnétique (1) sur des tirants (6). L'empilement des tôles rotoriques (11) se présente alors comme un cylindre dont la stabilité longitudinale est réalisée lors du montage du rotor en exerçant sur chacun des tirants (6) un effort de traction calibré.

Par conséquent, ces tôles rotoriques (11) présentent uniquement des ouvertures (105) destinées au passage des tirants (6) et des ouvertures (110) destinées au passage des barres (3) et plus de trou central.

En outre, le rotor selon la présente invention présente deux bouts d'arbre rapportés (4) supportant les paliers (non représentés). Ces bouts d'arbre sont disposés aux extrémités latérales de la masse magnétique (1).

Selon une forme d'exécution préférée de l'invention, les bouts d'arbre rapportés (4) sont réalisés en un matériau différent de celui de la masse magnétique. A titre d'exemple non limitatif, on peut réaliser les bouts d'arbre en un matériau non magnétique en vue d'éviter plus particulièrement les champs de fuite ou en un matériau inoxydable dans le cas d'une utilisation en milieu particulièrement corrosif. Des matières céramiques chemisées ou non sont également envisageables pour des applications spécifiques telles qu'un fonctionnement à haute température.

Le montage du rotor s'effectue comme suit: on dispose les tôles rotoriques (11) qui constitueront la masse magnétique (1) sur les tirants (6) et on dispose ensuite de part et d'autre de ladite masse magnétique (1) les anneaux de court-circuit (2) que l'on fixe ainsi que les bouts d'arbre (4). Ainsi que déjà mentionné précédemment, l'empilement des tôles rotoriques (11) sera stabilisé en exerçant sur chacun des tirants (6) un effort de traction calibré. De même, la concentricité de la masse magnétique (1) avec les bouts d'arbre (4) est réalisée en centrant ceux-ci sur les mêmes tirants (6).

Les anneaux de court-circuit (2) sont par contre montés avec un jeu vis-à-vis des tirants (6); c'est-à-dire que les ouvertures dans les anneaux (2) destinés au passage des tirants (6) sont légèrement supérieures au diamètre de ceux-ci (voir fig. 1) afin qu'ils puissent se dilater criconférentiellement indépendamment de la masse magnétique (1).

La concentricité des anneaux de court-circuit (2) par rapport aux autres pièces est alors réalisée à l'aide d'un emboîtement (7) qui s'insère dans les bouts d'arbre (4). Ensuite ces bouts d'arbre peuvent être usinés et parachevés afin de recevoir les paliers.

Enfin, on dispose un capot (8) pour couvrir les extrémités des tirants (6) afin de diminuer les pertes par ventilation.

Le capot peut également être réalisé avec des matériaux similaires à ceux utilisés pour la réalisation des bouts d'arbre et ceci pour les mêmes raisons.

Un moteur selon la présente invention présente les avantages suivants:
1) la vitesse périphérique est plus élevée du fait de l'absence d'arbre de rotation ce qui permet de fabriquer des tôles rotoriques (11) dépourvues de trou central;
2) la fréquence propre est particulièrement élevée du fait de la participation des tirants (6) à l'inertie de la machine donnant ainsi une grande inertie de flexion;
3) il existe une faible interdépendance transversale des anneaux de court-circuit (2), des barres (3) et de la masse magnétique (1) permettant à chacune des différentes parties constituant le rotor de se dilater librement indépendamment les unes des autres;
4) la structure générale du rotor permet d'obtenir une compacité longitudinale élevée du fait de la réserve élastique située dans les tirants (6);
5) la structure du rotor permet de sélectionner les matériaux utilisés pour les bouts d'arbre et le capot afin de réalisr une partie tournante soumise à des contraintes d'environnement particulières: absence de champs de fuite, forte corrosion, haute température...
6) enfin la forme aérodynamique générale du rotor selon la présente invention permet d'obtenir une diminution des pertes d'énergie par ventilation.

## Revendications

1. Moteur électrique asynchrone de puissance élevée et à vitesse de rotation élevée constitué d'un stator et d'un rotor dont le rotor comprend une masse magnétique feuilletée (1) constitué d'un empilement de tôles rotoriques (11) et une cage d'écureuil constituée par une pluralité de barres (3) réparties à la périphérie de ladite masse magnétique (1) et par deux anneaux de court-circuit (2) reliant les barres (3) et disposés de part et d'autre de ladite masse magnétique (1), ladite masse magnétique étant maintenue rigide par une série de tirants (8) s'appuyant sur deux bouts d'arbre (4) eux-mêmes disposés de part et d'autre de l'ensemble constitué par la masse magnétique (1) et les anneaux de court-circuit (2), caractérisé en ce que les tôles rotoriques (11) sont démunies de trou central, et en ce que chacun des deux anneaux de court-circuit (2) est placé entre un bout d'arbre (4) et la masse magnétique (1), lesdits anneaux de court-circuit étant pressés contre la masse magnétique (1) par lesdits tirants (8).

2. Moteur selon la revendication 1, caractérisé en ce que les bouts d'arbre rapportés (4) sont réalisés en un matériau différent de celui de la masse magnétique (1).

3. Moteur selon la revendication 2, caractérisé en ce que les bouts d'arbre rapportés (4) sont réalisés en un matériau non magnétique ou un matériau inoxydable ou en des matières céramiques chemisées ou non.

## Patentansprüche

1. Asynchroner Elektromotor von hoher Leistung und mit hoher Drehzahl, der aus einem Stator und einem Rotor besteht, wobei der Rotor eine lamellierte magnetische Masse (1) aufweist, die aus einem Stapel Rotorblechen (11) besteht, und eine Käfigwicklung aufweist, die gebildet wird von einer Vielzahl von Stäben (3), die über den Umfang der magnetischen Masse (1) verteilt sind, und von zwei Kurzschlußringen (2), die die Stäbe (3) miteinander verbinden und beiderseits der magnetischen Masse (1) angeordnet sind, wobei die magnetische Masse starr gehalten wird durch eine Reihe von Zugstäben (8), die sich auf zwei Wellenstümpfen (4) abstützen, die wiederum beiderseits der Einheit aus der magnetischen Masse (1) und den Kurzschlußringen (2) angeordnet sind, dadurch gekennzeichnet, daß die Rotorbleche (11) kein zentrales Loch aufweisen, und daß jeder der zwei Kurzschlußringe (2) zwischen einem Wellenstumpf (4) und der magnetischen Masse (1) angeordnet ist, wobei die Kurzschlußringe durch die Zugstäbe (8) gegen die magnetische Masse (1) gepreßt werden.

2. Motor gemäß Anspruch 1, dadurch gekennzeichnet, daß die aufgesetzten Wellenstümpfe (4) aus einem anderen Material als die magnetische Masse (1) verwirklicht sind.

3. Motor gemäß Anspruch 2, dadurch gekennzeichnet, daß die aufgesetzten Wellenstümpfe (4) aus einem unmagnetischen Material oder einem nichtoxidierbaren Material oder aus eventuell ummantelten keramischen Materialien verwirklicht sind.

## Claims

1. Asynchronous electric motor with high power and high rotational speed consisting of a stator and of a rotor, in which the rotor comprises a laminated magnetic mass (1) consisting of a stack of armature core disk laminations (11) and a squirrel cage consisting of a plurality of bars (3) distributed at the periphery of said magnetic mass (1) and of two short circuiting rings (2) joining the bars (3) together and located on either side of said magnetic mass (1), said magnetic mass being kept rigid by a series of tie rods (8) which rest on two shaft ends (4) which are themselves located on either side of the whole made of the magnetic mass (1) and of the short circuiting rings (2), characterized in that the armature core disk laminations (11) do not have a central hole, and in that each of the two short circuiting rings (2) is placed between a shaft end (4) and the magnetic mass (1), said short circuiting rings being squeezed against the magnetic mass (1) by said tie rods (8).

2. Motor according to claim 1, characterized in that the two attached shaft ends (4) are produced from a material different from that of the magnetic mass (1).

3. Motor according to claim 2, characterized in that the attached shaft ends (4) are produced from a nonmagnetic material or a material which cannot be oxidized or from sheathed or unsheathed ceramic materials.
